# DEMANDE DE BREVET EUROPEEN

(11) **EP 1 052 840 A1**
(43) Date de publication de la demande: **15.11.2000**
(21) Numéro de dépôt: 00401279.5
(22) Date de dépôt: 10.05.2000
(51) Int. Cl.: H04M 11/02

(54) **Dispositif de protection d'un local contre des intrusions**

(30) Priorité: 11.05.1999 FR 9905997
(71) Demandeur: FRANCE TELECOM, 75015 Paris (FR)
(72) Inventeur: Million-Rousseau, Bruno, 77920 Samois sur Seine (FR); Junker, Christian, 95170 Deuil La Barre (FR)
(74) Mandataire: Moncheny, Michel

(57) **Abrégé**

Ce dispositif de protection d'un local contre des intrusions comporte une unité centrale (20) de commande disposée dans le local, comprenant des moyens pour établir une communication entre des postes de télécommunication intérieur (10) et extérieur (12) au local et des moyens (22, 37) de commande du déverrouillage de moyens d'accès au local de manière à en permettre l'accès à un visiteur après établissement de la communication entre lesdits postes et identification du visiteur. L'unité centrale comporte en outre des moyens (24) de transfert d'appels vers un poste téléphonique, adaptés pour établir une liaison téléphonique entre ledit poste téléphonique et le poste de télécommunication extérieur au local, après appel, au moyen de ce dernier, du poste de télécommunication intérieur.

## Description

La présente invention est relative à un dispositif de protection d'un local contre les intrusions, particulièrement adapté pour être installé dans des habitations privées.

Les dispositifs de protection de ce type comportent généralement une unité centrale de commande disposée dans le local, laquelle unité centrale comporte des moyens pour établir une communication entre des postes de télécommunication intérieur et extérieur au local et des moyens de commande du déverrouillage de moyens d'accès au local de manière à en permettre l'accès à un visiteur, après établissement de la communication entre lesdits postes et identification du visiteur.

Par exemple, pour l'identification du visiteur, les postes de télécommunication intérieur et extérieur au local peuvent être adaptés pour émettre et recevoir des signaux vocaux. Le poste de télécommunication extérieur peut en outre être doté d'un organe de prise de vues, le poste intérieur étant, dans ce cas, doté d'un écran correspondant.

Les dispositifs de ce type sont avantageux, dans la mesure où l'accès au local n'est autorisé qu'après identification du visiteur.

Ils présentent toutefois un certain nombre d'inconvénients, notamment en raison du fait qu'ils ne permettent pas d'éviter, à des tiers, de vérifier l'absence du propriétaire avant de commettre des actes répréhensibles, par exemple un cambriolage.

Pour pallier cet inconvénient, certains dispositifs sont dotés de moyens de mémorisation des images prises par l'organe de prise de vues afin de permettre d'identifier, a posteriori, l'auteur d'un tel acte.

Ils ne permettent toutefois pas d'éviter que cette personne vérifie, avant de commettre ses actes, l'absence du propriétaire.

Le but de l'invention est de pallier ces inconvénients.

Elle a donc pour objet un dispositif de protection d'un local contre des intrusions du type précité, caractérisé en ce qu'il comporte en outre une unité centrale de commande disposée dans le local et comportant des moyens de transfert d'appels vers un poste téléphonique adaptés pour établir une liaison téléphonique entre ledit poste téléphonique et le poste de télécommunication extérieur au local, après appel, au moyen de ce dernier, du poste de télécommunication intérieur.

Dans différents modes de réalisation, le dispositif de protection selon l'invention peut en outre comporter une ou plusieurs des caractéristiques suivantes, prises isolément ou selon toutes les combinaisons techniquement possibles :
- il comporte en outre des moyens de décodage de codes de commande reçus en provenance du poste téléphonique pour provoquer, en réponse, l'exécution de fonctions prédéterminées ;
- le poste téléphonique est un poste téléphonique sans fil cellulaire ;
- les moyens de transfert d'appels comportent des éléments de circuit de téléphonie câblée ;
- les moyens de transfert d'appels comportent des éléments de circuit de téléphonie sans fil ;
- les éléments de circuit de téléphonie câblée comportent des moyens de détection de dysfonctionnements d'une ligne téléphonique câblée à laquelle ils sont raccordés et comprennent en outre des moyens d'actionnement des éléments de circuit de téléphonie sans fil en cas de dysfonctionnement de la ligne téléphonique câblée ;
- il comporte au moins un relais raccordé à l'unité centrale de commande et à un dispositif d'exécution d'une desdites fonctions prédéterminées ; et
- il comporte en outre des moyens pour provoquer l'émission, par le poste de télécommunications extérieur, d'un message d'attente au cours de l'établissement de la liaison téléphonique avec le poste téléphonique.

D'autres caractéristiques et avantages ressortiront de la description suivante, donnée uniquement à titre d'exemple et faite en référence aux dessins annexés sur lesquels :
- la figure 1 est un schéma synoptique illustrant la structure générale du dispositif de protection conforme à l'invention ; et
- la figure 2 est un organigramme montrant les différentes phases de fonctionnement du dispositif de la figure 1.

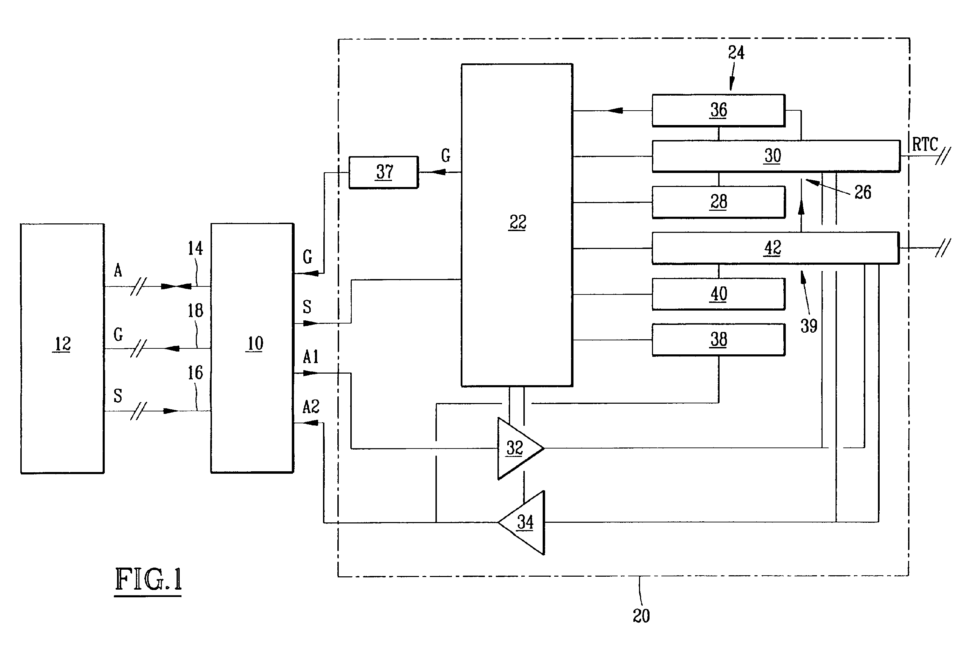

Sur la figure 1, on a représenté la structure générale d'un dispositif de protection d'un local contre des intrusions, conforme à l'invention.

On voit sur cette figure que le dispositif comporte, comme cela est classique, des postes de télécommunication destinés à être disposés à l'intérieur et à l'extérieur du local, désignés respectivement par les références numériques générales 10 et 12.

Ces postes de télécommunications 10 et 12 sont des postes de type classique. Ils ne seront pas décrits en détail par la suite.

On notera toutefois qu'ils sont reliés par une liaison câblée comportant, par exemple, trois paires de fils 14, 16 et 18, véhiculant respectivement des signaux audio A, des signaux d'appel S, émis par exemple par une sonnette incorporée au poste extérieur 12 et des signaux G de commande de l'exécution de fonctions prédéterminées, par exemple un signal de commande de gâche.

Ils peuvent, bien entendu, être capables de véhiculer un plus grand nombre de signaux, par exemple des signaux vidéo ou des signaux de commande d'exécution de fonctions domestiques de différentes natures en prévoyant un câblage approprié.

Le poste 10 intérieur au local est associé à une unité centrale de commande 20 incorporant, comme cela est classique, des moyens pilotant l'établissement d'une communication entre l'intérieur et l'extérieur du local, après actionnement d'une sonnette placée sur le poste extérieur et, le cas échéant, la transmission du signal de commande G permettant à un visiteur l'accès au local surveillé, après son identification.

Selon l'invention, l'unité centrale 20 incorpore des moyens de transfert de l'appel du poste intérieur 10 vers un poste téléphonique (non représenté) placé à distance du dispositif.

Plus particulièrement, l'unité centrale de commande 20 comporte un circuit logique de commande 22 constitué principalement par un micro-contrôleur recevant, en entrée, le signal d'appel S reçu en provenance du poste extérieur et délivrant, en sortie, comme cela sera décrit en détail par la suite, le signal G de commande, ce signal G étant destiné à être transmis vers le poste extérieur 12.

L'unité centrale de commande 20 reçoit également, en entrée, des signaux audio A1, reçus en provenance du poste extérieur 12 et délivre, en sortie, des signaux audio A2 destinés à être transmis vers ce poste extérieur 12.

L'unité centrale 20 est dotée de circuits de téléphonie 24 assurant le transfert d'appels vers le poste téléphonique distant.

Plus particulièrement, les circuits de téléphonie 24 incorporent un premier circuit 26 de téléphonie de type câblée, adapté pour l'établissement d'une liaison téléphonique avec le poste distant par l'intermédiaire d'une ligne téléphonique câblée RTC.

Le circuit de téléphonie câblée 26 comporte un circuit de numérotation 28 raccordé à un circuit d'interface 30. Ces circuits sont constitués par des éléments de circuit de type classique, appropriés pour l'utilisation envisagée. Ils ne seront donc pas décrits en détail par la suite. On notera qu'ils sont adaptés pour réaliser un décroché sur la ligne et procéder à la numérotation d'un numéro téléphonique extrait du circuit logique de commande 22 et correspondent au numéro d'appel du poste téléphonique distant.

De préférence, ce numéro d'appel correspond au numéro d'appel du poste téléphonique sans fil cellulaire ou mobile du résidant.

Le circuit d'interface 30 est raccordé à deux amplificateurs opérationnels 32 et 34 pilotés par le circuit de commande 22 de manière à permettre, après établissement de la liaison téléphonique avec le poste téléphonique, d'une part, la transmission des signaux audio A1 reçus en provenance du poste extérieur 12 vers le poste téléphonique distant et, d'autre part, la transmission des signaux audio A2 en provenance du poste téléphonique distant vers le poste de télécommunication 12 extérieur au local.

Par ailleurs, les circuits de téléphonie 24 comportent un circuit 36 de détection de codes de commande reçus en provenance du poste téléphonique distant, par l'intermédiaire du circuit d'interface 30 et le circuit logique de commande 22 incorpore des moyens de décodage de ces codes de commande.

Après décodage, le circuit de commande 22 provoque l'émission du signal G à destination d'un relais 37 pour la réalisation de la fonction correspondante.

Dans l'exemple de réalisation représenté sur la figure 1, on a considéré qu'une seule fonction prédéterminée, correspondant à l'actionnement de la gâche d'un portail d'entrée, est réalisée. Bien entendu, il est également possible de piloter l'ouverture de plusieurs moyens d'accès ou de piloter d'autres dispositifs d'exécution de fonctions domestiques en dotant le dispositif de relais 37 correspondant chacun à un dispositif à piloter.

Par ailleurs, le circuit logique de commande 22 est raccordé à un circuit 38 de synthèse vocale raccordé à la sortie de l'amplificateur opérationnel 34 assurant la transmission des signaux audio A2 vers le poste extérieur 12 de manière à émettre, en direction de ce dernier, un message d'accueil pour rendre inaudible l'établissement de la liaison téléphonique avec le poste téléphonique distant, en particulier lorsque ce dernier est constitué par un poste téléphonique cellulaire ou «mobile».

Enfin, l'unité centrale de commande 20, et en particulier le circuit de téléphonie câblée 26 est doté de moyens permettant de tester l'état de la liaison téléphonique à laquelle elle est raccordée, constitués par exemple par un circuit de détection de la tension présente sur la ligne téléphonique.

Ainsi, en cas de défaut de raccordement du dispositif à la ligne téléphonique, le circuit logique de commande 22 actionne un deuxième circuit de téléphonie 39 constitué par des éléments de circuit de téléphonie sans fil, c'est-à-dire de type mobile.

Par éléments de circuit de téléphonie sans fil ou «mobile», on entend, dans le cadre de la présente demande, des éléments de circuit de téléphonie capables d'établir une liaison téléphonique sur un réseau téléphonique sans fil ou de mobile, par opposition aux réseaux téléphoniques filaires ou commutés RTC, par exemple des éléments de circuits de téléphonie appartenant notamment à la norme DCS 1800 («Digital Cellular System») ou à la norme GSM («Global System for Mobil Communications»).

Ce deuxième circuit de téléphonie 39 comporte, également, un circuit de numérotation 40 et un circuit d'interface 42 raccordés au circuit de commande 22, au circuit de détection 36 et aux amplificateurs 32 et 34. Ces circuits 40 et 42 sont également constitués par des éléments de circuit de type classique, appropriés pour l'utilisation envisagée. Ils ne seront donc pas décrits par la suite.

On notera toutefois qu'ils sont capables d'établir une liaison téléphonique avec un poste téléphonique en utilisant le réseau de téléphonie sans fil ou «mobile», à partir d'un numéro d'appel stocké dans le circuit de commande 22, de manière à transférer les appels reçus en provenance du poste de télécommunication externe 12 vers le poste distant, en cas de dysfonctionnement de la ligne téléphonique câblée RTC.

Ce deuxième circuit 39 constitue un élément facultatif redondant de l'unité centrale de commande 20, et nécessite de prévoir un abonnement spécifique.

On notera que le dispositif qui vient d'être décrit est également doté d'un bouton-poussoir prévu sur le boîtier de l'unité centrale 20 permettant l'élaboration et la commande de l'envoi du signal G.

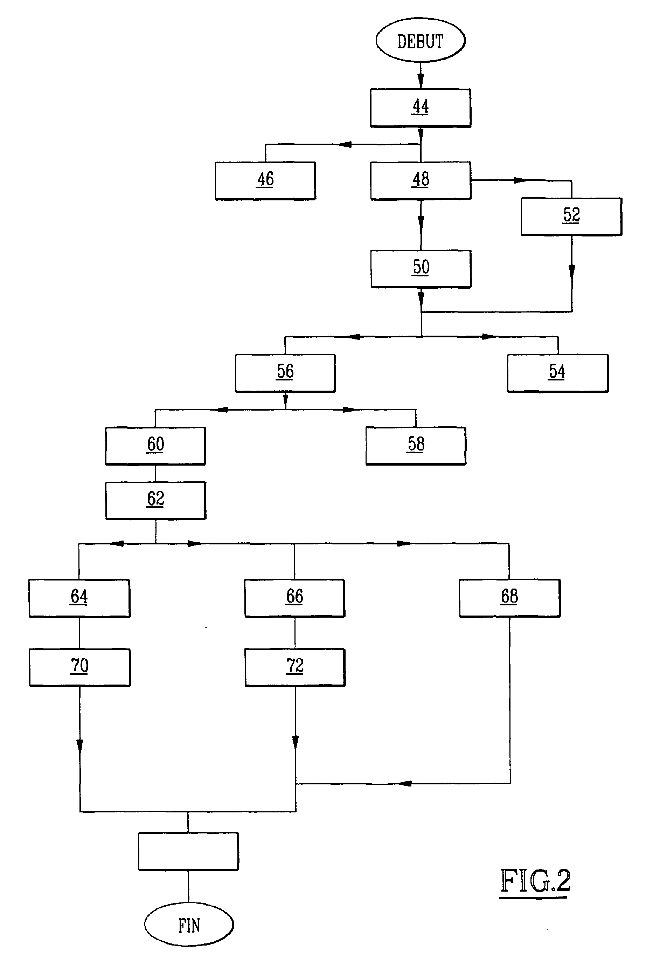

Le fonctionnement du dispositif qui vient d'être décrit va maintenant être illustré en référence à la figure 2.

Après réception du signal d'appel S provenant de la sonnette (étape 44), le dispositif provoque, simultanément, l'émission d'un message d'accueil (étape 46) au moyen du circuit 38 de synthèse vocale et un décroché, au moyen du circuit d'interface 30 (étape 48).

Au cours de cette étape 48, le circuit de téléphonie 26 procède à un test de l'état de la ligne téléphonique RTC en vérifiant la présence ou l'absence de tonalité, par exemple par détection de la tension sur la ligne téléphonique.

En l'absence de dysfonctionnement de la ligne téléphonique RTC, le circuit de numérotation 28 et le circuit d'interface 30 procèdent, conjointement, à l'appel du poste téléphonique distant (étape 50).

En cas de dysfonctionnement de la ligne téléphonique RTC, l'unité centrale de commande 20 procède à l'appel du poste téléphonique en utilisant le deuxième circuit de téléphonie 38 (étape 52).

En cas de défaut de réponse du poste téléphonique, le dispositif est désactivé (étape 54).

Au contraire, après décroché du poste téléphonique distant, lors de l'étape 56 suivante, le dispositif transmet, en direction du poste téléphonique distant, les signaux audio A1 reçus en provenance du poste extérieur au local.

L'utilisateur a ensuite le choix de raccrocher directement son poste téléphonique (étape 58), ce qui provoque un arrêt du fonctionnement du dispositif ou d'actionner une touche prédéterminée sur son combiné (étape 60). Ce signal, détecté par le circuit de détection 36 et décodé par le circuit logique de commande 22, provoque, en réponse, l'établissement d'une communication entre le poste 12 extérieur au local et le poste téléphonique pour permettre une conversation entre le visiteur et le résidant (étape 62).

Après identification du visiteur, l'utilisateur peut, au cours des étapes 64, 66 et 68 suivantes, actionner des touches prédéterminées sur son combiné de manière à provoquer l'exécution de fonctions prédéterminées.

Par exemple, une action sur la touche correspondant au chiffre 0 (étape 64) provoque le blocage du dispositif (étape 70) et son arrêt jusqu'au retour du propriétaire dans son local.

Au contraire, une action de la touche correspondant au chiffre 1 provoque, par exemple, l'émission du signal de commande de gâche (étape 72) autorisant ainsi l'entrée dans le local surveillé.

Enfin, dans le cas où le propriétaire ne souhaite pas autoriser l'accès au local, une action sur la touche correspondant au chiffre 5 provoque un arrêt du fonctionnement du dispositif. Cette solution évite, par exemple, les tonalités signalant le raccroché du poste téléphonique distant.

Dans la mesure où un message d'attente est émis en direction du poste extérieur 12 lors de l'établissement de la liaison téléphonique avec le téléphone cellulaire, le visiteur a l'illusion que le local surveillé est occupé.

On conçoit donc que l'invention qui vient d'être décrite permet d'augmenter considérablement la sécurité du local surveillé.

On notera également que l'invention qui vient d'être décrite permet également de rendre plus conviviaux les dispositifs de protection dans la mesure où ils évitent au propriétaire de se déplacer jusqu'au poste intérieur 10 pour commander le déverrouillage de moyens d'accès, les signaux de commande pouvant être émis à partir du poste téléphonique distant.

## Revendications

1. Dispositif de protection d'un local contre des intrusions, comprenant une unité centrale de commande (20) disposée dans le local, laquelle unité centrale comporte des moyens pour établir une communication entre des postes de télécommunication intérieur (10) et extérieur (12) au local et des moyens (22, 37) de commande du déverrouillage de moyens d'accès au local de façon à en permettre l'accès à un visiteur après établissement de la communication entre lesdits postes et identification du visiteur, caractérisé en ce que l'unité centrale (20) comporte en outre des moyens (22, 24) de transfert d'appel vers un poste téléphonique adaptés pour établir une liaison téléphonique entre ledit poste téléphonique et le poste de télécommunication (12) extérieur au local, après appel, au moyen de ce dernier, du poste de télécommunication intérieur.

2. Dispositif selon la revendication 1, caractérisé en ce qu'il comporte en outre des moyens de décodage (22, 36) de codes de commande reçus en provenance du poste téléphonique pour provoquer, en réponse, l'exécution de fonctions prédéterminées.

3. Dispositif selon l'une des revendications 1 et 2, caractérisé en ce que le poste téléphonique est un poste téléphonique sans fil cellulaire.

4. Dispositif selon l'une quelconque des revendications 1 à 3, caractérisé en ce que les moyens (22, 24) de transfert d'appels comportent des éléments de circuit de téléphonie câblée.

5. Dispositif selon l'une quelconque des revendications 1 à 4, caractérisé en ce que les moyens (22, 24) de transfert d'appels comportent des éléments de circuit de téléphonie sans fil.

6. Dispositif selon les revendications 4 et 5, caractérisé en ce que les éléments de circuit de téléphonie câblée comportent des moyens de détection de dysfonctionnements d'une ligne téléphonique câblée (RTC) à laquelle ils sont raccordés et en ce qu'ils comportent en outre des moyens (22) d'actionnement des éléments de circuit de téléphonie sans fil en cas de dysfonctionnement de la ligne téléphonique câblée.

7. Dispositif selon l'une quelconque des revendications 2 à 6, caractérisé en ce qu'il comporte au moins un relais (37) raccordé à l'unité centrale de commande et à un dispositif d'exécution d'une desdites fonctions prédéterminées.

8. Dispositif selon l'une quelconque des revendications 1 à 7, caractérisé en ce qu'il comporte en outre des moyens (38) pour provoquer l'émission, par le poste de télécommunication extérieur, d'un message d'attente au cours de l'établissement de la liaison téléphonique avec le poste téléphonique.
